# DEMANDE DE BREVET EUROPEEN

(11) **EP 2 602 956 A1**
(43) Date de publication de la demande: **12.06.2013**
(21) Numéro de dépôt: 11306629.4
(22) Date de dépôt: 08.12.2011
(51) Int. Cl.: H04L 9/08, H04L 29/06

(54) **Procédé de personnalisation d'un élément de sécurité coopérant avec un terminal de télécommunications et système correspondant**

(71) Demandeur: Gemalto SA, 92190 Meudon (FR)
(72) Inventeur: Gonzalvo, Benoit, 13705 LA CIOTAT (FR); Gouget, Aline, 13705 LA CIOTAT (FR); Faure, Frédéric, 13705 LA CIOTAT (FR); Roussel, Nicolas, 13705 LA CIOTAT (FR); Pico, Richard, 13705 LA CIOTAT CEDEX (FR); Berard, Xavier, 13705 LA CIOTAT (FR); Paillart, Frédéric, 13705 LA CIOTAT (FR)

(57) **Abrégé**

L'invention concerne notamment un procédé de personnalisation d'un élément de sécurité (ESi) coopérant avec un terminal de télécommunications, cette personnalisation consistant à télécharger des données confidentielles (DC) dans l'élément de sécurité.

Selon l'invention, le procédé consiste à :
- provisionner, au niveau d'un fournisseur de données (10), les données confidentielles (DC) ;
- transmettre les données confidentielles (DC) chiffrées par une clé de session (K) à un gestionnaire (11) de l'élément de sécurité (ESi), la clé de session (K) étant chiffrée par une clé de transport (K_DP), le gestionnaire étant connecté à un système de gestion de clés (KMS) comprenant des moyens pour réaliser pour chaque clé de transport (K_DP) une opération de déchiffrement et de rechiffrement atomique par une clé de chiffrement associée à une clé (K_SDi) comprise dans l'élément de sécurité (ESi) ;
- transmettre depuis le gestionnaire (11) de l'élément de sécurité (ESi) à cet élément de sécurité (ESi) les données confidentielles (DC) chiffrées par la clé de session (K) ainsi que cette clé de session (K) chiffrée par la clé associée à la clé (K_SDi) comprise dans l'élément de sécurité (ESi) ;
- déchiffrer, au niveau de l'élément de sécurité (ESi), la clé K de session (K) à l'aide de la clé (K_SDi) stockée dans l'élément de sécurité (ESi) ;
- déchiffrer les données confidentielles dans l'élément de sécurité à l'aide de la clé de session (K) et installer les données confidentielles dans l'élément de sécurité (ESi).

## Description

Le domaine de l'invention est celui des télécommunications et concerne notamment un procédé permettant de personnaliser un élément de sécurité coopérant avec un terminal de télécommunications. On entend par personnalisation le téléchargement de données confidentielles dans l'élément de sécurité.

L'élément de sécurité est typiquement une carte SIM, UICC ou USIM destinée à être insérée de manière amovible dans un terminal de télécommunications, tel qu'un téléphone portable, une tablette numérique ou un smartphone. Cet élément de sécurité peut également se présenter sous la forme d'un circuit intégré soudé dans un terminal de télécommunications compris (ou coopérant avec une machine), dans le cas d'applications M2M (Machine to Machine), l'élément de sécurité étant alors appelé e-UICC et remplissant les mêmes fonctions qu'une carte UICC classique. On entend ici par «fonctions» l'authentification de l'abonné à un réseau de télécommunications, par exemple cellulaire, lui permettant d'établir de manière sécurisée des communications avec des éléments connectés au réseau de l'opérateur. Un tel élément de sécurité renferme notamment un IMSI (International Mobile Subscriber Identity) et une clé Ki lui permettant de s'authentifier sur le réseau de l'opérateur.

Un élément de sécurité peut également se présenter sous la forme d'un élément comprenant une application, par exemple une application de paiement de type NFC, soit comprise dans un élément amovible du terminal tel qu'une carte SD, soit comprise dans une puce soudée sur un circuit imprimé, de la même manière qu'un e-UICC.

Habituellement, lorsqu'une personne souhaite souscrire un abonnement auprès d'un opérateur, celle-ci se rend dans un centre de vente d'opérateur qui, après lui avoir demandé des documents relatifs à son compte bancaire et son lieu de résidence, lui donne une carte UICC (et éventuellement un téléphone mobile). La carte UICC renferme déjà les identifiants lui permettant de se connecter presque immédiatement au réseau de l'opérateur (le HLR de l'opérateur est préprovisionné avec ces identifiants).

Le problème posé avec ce type de souscription d'abonnement est que l'utilisateur doit se déplacer dans le centre de vente d'opérateur pour obtenir ou changer son abonnement. Ceci n'est pas non plus possible dans le cas d'applications M2M où les e-UICC sont intégrés dans les machines (véhicules, distributeurs de boissons, consoles de jeu, livres électroniques de types tablettes, ... ).

Il est fréquent que de très nombreux éléments de sécurité doivent recevoir dans un laps de temps très limité des données confidentielles. A titre d'exemple, si un constructeur de véhicules décide de changer d'opérateur pour les communications de type M2M entre les véhicules de sa marque et un centre de surveillance ou de service parce qu'un autre opérateur lui propose des tarifs plus avantageux, il faut que de nouveaux abonnements téléphoniques correspondants à ce nouvel opérateur puissent être quasi-immédiatement téléchargés dans les e-UICC équipant les véhicules de sa marque. Cela nécessite la génération de plusieurs milliers voire millions d'abonnements avant leur téléchargement dans les différents e-UICCs et une telle opération peut prendre un temps considérable, non compatible avec les exigences du constructeur.

Un autre exemple concerne les périodes de fête, tel que Noël par exemple, où de nombreux cadeaux tels que des téléphones portables, des tablettes numériques ou des jeux électroniques sont offerts. Si ces appareils sont pourvus d'e-UICCs, leurs détenteurs voudront tous s'abonner le plus rapidement possible auprès d'un opérateur de leur choix, ce qui générera le même problème de génération de très nombreux abonnements dans un laps de temps très court.

Ces problèmes se posent également lorsqu'il ne s'agit pas de télécharger des abonnements (crédentials) mais seulement des données confidentielles dans des éléments de sécurité, comme par exemple des applications NFC.

La présente invention a pour objectif de remédier à ces inconvénients.

Plus précisément, l'invention propose de dé-corréler la préparation de données confidentielles de leur transfert vers les éléments de sécurité. On entend par dé-corrélation le fait que les données sont chiffrées sans avoir besoin de savoir par quel élément de sécurité ces données devront être déchiffrées.

Typiquement, dans le cas de téléchargements d'abonnements, l'invention fait intervenir trois acteurs distincts :
- Un fournisseur de données provisionne des données confidentielles, telles que l'IMSI, la clé Ki, éventuellement le répertoire téléphonique de l'abonné qu'il aura préalablement obtenu, destinées à être chargées dans un élément de sécurité (UICC ou e-UICC). Ce fournisseur de données est typiquement un opérateur de radiotéléphonie mobile ou alors un tiers de confiance à qui ces données sont fournies par l'opérateur (par exemple un fabricant d'éléments de sécurité, tel qu'un fabricant de cartes SIM).
- Un gestionnaire de l'élément de sécurité qui obtient de la part du fournisseur précité les données confidentielles à télécharger (par exemple via OTA) dans l'élément de sécurité. Ce gestionnaire a pour principale fonction de stocker les données confidentielles correspondant aux abonnements jusqu'à ce que celles-ci doivent être transmises à des éléments de sécurité.
- Enfin, le fabricant de l'élément de sécurité. Cet élément de sécurité est compris dans un terminal afin qu'il puisse communiquer avec le gestionnaire de l'élément de sécurité.

Comme indiqué précédemment, les données confidentielles doivent pouvoir être transférées dans les éléments de sécurité en grande quantité, notamment s'il s'agit d'applications M2M. Par exemple, un constructeur automobile peut avoir souscrit des abonnements pour un nombre très important de véhicules (applications M2M) auprès d'un opérateur donné (opérateur A). Si un autre opérateur (opérateur B) lui propose ultérieurement de meilleures conditions tarifaires ou si son réseau couvre une zone géographique plus importante que l'opérateur A, le constructeur automobile aura intérêt (pour ses clients déjà abonnés à l'opérateur A), de changer les données confidentielles comprises dans l'élément de sécurité afin que ceux-ci communiquent sur le réseau de l'opérateur B.

Le fait de stocker, au niveau du gestionnaire des éléments de sécurité, des abonnements pour l'opérateur B, permet de ne plus avoir à générer ces abonnements au fil de l'eau, c'est-à-dire au fur et à mesure qu'ils doivent être téléchargés dans les éléments de sécurité, soit à la demande de l'utilisateur final, soit à la demande d'un opérateur. Cet avantage s'applique quelque soit le type de données confidentielles à télécharger dans les éléments de sécurité (par exemple des applications).

A cet effet, la présente invention propose un procédé de personnalisation d'un élément de sécurité coopérant avec un terminal de télécommunications, cette personnalisation consistant à télécharger des données confidentielles dans l'élément de sécurité. Selon l'invention, le procédé consiste à :
- provisionner, au niveau d'un fournisseur de données, les données confidentielles ;
- transmettre les données confidentielles chiffrées par une clé de session à un gestionnaire de l'élément de sécurité, la clé de session étant chiffrée par une clé de transport, le gestionnaire étant connecté à un système de gestion de clés comprenant des moyens pour réaliser pour chaque clé de transport une opération de déchiffrement et de rechiffrement atomique par une clé de chiffrement associée à l'élement de sécurité de telle sorte que la clé de session pourra être déchiffrée par l'élément de sécurité en utilisant une clé comprise dans l'élément de sécurité ;
- transmettre depuis le gestionnaire de l'élément de sécurité à l'élément de sécurité les données confidentielles chiffrées par la clé de session ainsi que cette clé de session déchiffrable par la clé comprise dans l'élément de sécurité ;
- déchiffrer, au niveau de l'élément de sécurité, la clé K de session à l'aide de la clé stockée dans l'élément de sécurité ;
- déchiffrer les données confidentielles dans l'élément de sécurité à l'aide de la clé de session et installer les données confidentielles dans l'élément de sécurité.

L'élément de sécurité est de préférence un e-UICC.

L'élément de sécurité est avantageusement un élément de sécurité dédié à une application différente d'une application téléphonique.

Préférentiellement, l'élément de sécurité renferme une application de paiement de type NFC.

Le terminal de télécommunications est avantageusement connecté à une machine pour des communications de type M2M.

L'invention concerne également un système de personnalisation d'un élément de sécurité coopérant avec un terminal de télécommunications, cette personnalisation consistant à télécharger des données confidentielles dans l'élément de sécurité. Selon l'invention, le système comprend :
- des moyens pour provisionner, au niveau d'un fournisseur de données, les données confidentielles ;
- des moyens pour transmettre les données confidentielles chiffrées par une clé de session à un gestionnaire de l'élément de sécurité, la clé de session étant chiffrée par une clé de transport, le gestionnaire étant connecté à un système de gestion de clés comprenant des moyens pour réaliser pour chaque clé de transport une opération de déchiffrement et de rechiffrement atomique par une clé de chiffrement associée à une clé comprise dans l'élément de sécurité ;

- des moyens pour transmettre depuis le gestionnaire de l'élément de sécurité à cet élément de sécurité les données confidentielles chiffrées par la clé de session ainsi que cette clé de session chiffrée par la clé comprise dans l'élément de sécurité ;
- des moyens pour déchiffrer, au niveau de l'élément de sécurité, la clé K de session à l'aide de la clé stockée dans l'élément de sécurité ;
- des moyens pour déchiffrer les données confidentielles dans l'élément de sécurité à l'aide de la clé de session et pour installer les données confidentielles dans l'élément de sécurité.

D'autres caractéristiques et avantages de l'invention apparaîtront à la lecture de la description suivante de deux modes de mise en oeuvre de l'invention, donnés à titre illustratif et non limitatif, et des figures annexées représentant deux systèmes mettant en oeuvre le procédé selon la présente invention, dans lesquelles :
- La figure 1 représente un système mettant en oeuvre le procédé selon la présente invention en utilisant des clés secrètes ;
- La figure 2 représente un système mettant en oeuvre le procédé selon la présente invention en utilisant des clés publiques.

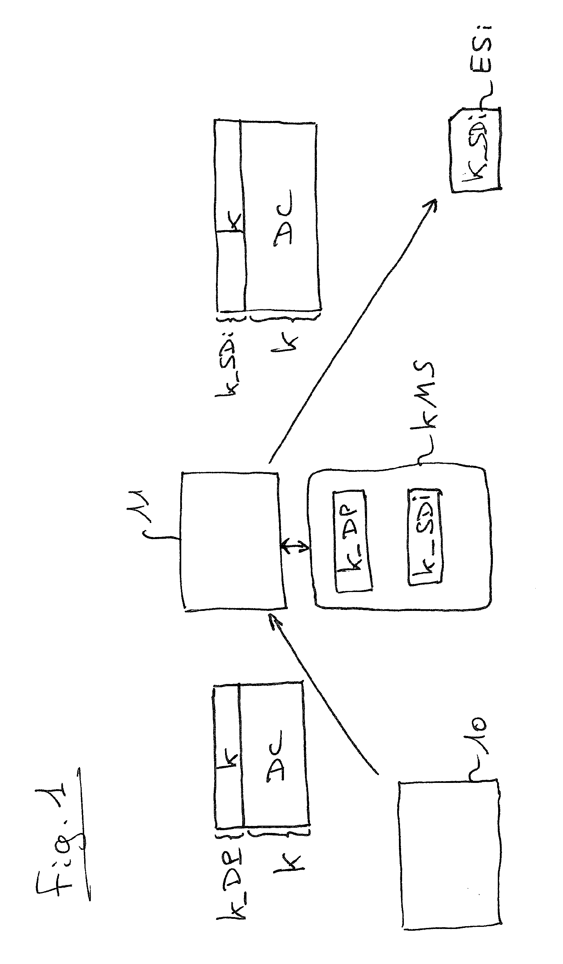

La figure 1 représente un système mettant en oeuvre le procédé selon la présente invention en utilisant des clés secrètes.

L'invention propose de personnaliser un élément de sécurité ESi coopérant avec un terminal de télécommunications non représenté (typiquement une machine ou un terminal de radiotéléphonie mobile). Cette personnalisation consiste à télécharger des données confidentielles DC dans l'élément de sécurité ESi. Ces données confidentielles DC sont typiquement, pour chaque élément de sécurité ESi, une clé Ki, un IMSI, ainsi que des fichiers permettant au terminal de communiquer avec un réseau d'opérateur de téléphonie mobile. Ces données correspondent donc à un abonnement à un réseau d'opérateur.

Le procédé selon l'invention consiste dans un premier temps à provisionner, au niveau d'un fournisseur de données 10, les données confidentielles à télécharger dans un élément de sécurité. Ce fournisseur de données est par exemple un opérateur de réseau de téléphonie (MNO) ou un fabricant de cartes travaillant en collaboration avec cet opérateur. Il peut également s'agir d'un établissement bancaire désirant permettre à un abonné de réaliser des opérations bancaires, par exemple de type NFC. Les données confidentielles sont packagées (IMSI/Ki, données pré-chargées, fichiers opérateurs, applications bancaires, applications NFC, ...). Le fournisseur de données prépare ainsi de multiples paquets de données confidentielles DC à télécharger dans des éléments de sécurité, des milliers, voire plusieurs millions.

Le fournisseur de données 10 chiffre les données confidentielles par une clé de session K, cette clé de session étant elle-même chiffrée par une clé de transport K_DP. Comme indiqué sur la figure, un package comprenant les données confidentielles DC chiffrées par la clé de session K ainsi que la clé de session K chiffrée par la clé de transport K_DP est transmis à un gestionnaire 11 de l'élément de sécurité ESi. Afin de conserver secrètes les données confidentielles DC au niveau du gestionnaire 11, celui-ci coopère avec un système de gestion de clés KMS (Key Management System en anglais-Système de gestion de clés en français) qui a pour seule fonction de réaliser pour chaque clé de transport K_DP une opération de déchiffrement et de rechiffrement atomique par une clé de chiffrement correspondant à une clé K_SDi comprise dans l'élément de sécurité ESi dans lequel les données confidentielles DC devront être installées. Le gestionnaire 11 n'a pas accès aux données confidentielles DC et ne fait que rechiffrer la clé K (préalablement chiffrée par la clé K_DP) par une autre clé, K_SDi. Les clés K_DP et K_SDi ne sortent pas du KMS qui remplit la fonction d'un coffre-fort.

Il n'y a pas de relation entre les clés K_DP et K_SDi, c'est-à-dire que l'on n'a pas besoin de connaître l'élément de sécurité dans lequel seront chargées les données DC. Il peut indifféremment s'agir d'un terminal de radiotéléphonie mobile, une machine, un véhicule, ....

Les clés K_DP et K_SDi sont chargées dans le KMS par exemple respectivement par le fournisseur de données (l'opérateur) et le fabricant de l'élément de sécurité ESi (le fabricant de carte, de l'élément de sécurité ou celui de l'e-UICC). Ces chargements ont lieu pendant une procédure de chargement de clés. Le gestionnaire 11 n'a pas accès à ces clés.

Le gestionnaire 11 de l'élément de sécurité ESi a pour seule fonction, après avoir procédé au déchiffrement et au rechiffrement atomique des clés, de retransmettre le package rechiffré (les données confidentielles DC sont toujours chiffrées par la clé K et la clé K est maintenant chiffrée par la clé K_SDi) à l'élément de sécurité ESi. Ces déchiffrements et rechiffrements ont lieu à l'occurrence d'une demande émanant par exemple d'un opérateur de radiotéléphonie mobile demandant au gestionnaire 11 de télécharger un nouvel abonnement dans l'ESi ou alors, comme mentionné précédemment émanant d'un opérateur de machines, tel qu'EDF ou un constructeur automobile. L'élément de sécurité ESi comprend la clé K_SDi lui permettant de déchiffrer la clé de session K. Grâce à cette clé K, l'élément de sécurité ESi est apte à déchiffrer les données confidentielles DC et à installer ces données confidentielles DC dans l'élément de sécurité ESi. L'élément de sécurité ESi est alors apte à fonctionner sur le réseau de l'opérateur ayant fourni les données confidentielles DC sans que le gestionnaire 11 n'ait eu accès à ces données confidentielles DC.

Il est à signaler qu'il aurait été envisageable de ne chiffrer les données confidentielles qu'avec la clé K_DP et de procéder au déchiffrement et rechiffrement atomique par la clé K_SDi. Cette solution n'est cependant pas optimale car elle requiert d'importantes opérations en termes de volume si les données confidentielles sont volumineuses.

L'élément de sécurité ESi est de préférence un e-UICC, c'est-à-dire une puce soudée dans le terminal avec lequel il coopère. Selon une alternative, l'ESi est une carte de type UICC, USIM ou R-UIM.

L'élément de sécurité ESi peut également être un élément de sécurité dédié à une application différente d'une application téléphonique, par exemple destiné à une application de paiement. Cette application de paiement peut être de type NFC. Les données confidentielles chargées dans l'élément de sécurité sont alors des applications bancaires. L'élément de sécurité peut se présenter sous la forme d'un élément soudé ou extractible du terminal avec lequel il coopère.

Ainsi, contrairement à l'état de la technique où les éléments de sécurité sont fabriqués et distribués par le fournisseur de données (typiquement l'opérateur), l'invention repose sur le fait que la préparation des données confidentielles et leur transfert vers le gestionnaire 11 est dé-corrélée du chargement depuis le gestionnaire 11 vers l'élément de sécurité ESi.

Le fournisseur de données 10 peut générer des données confidentielles sans connaître les éléments de sécurité dans lesquels ils seront téléchargés. De plus, il peut préparer les données confidentielles DC en grandes quantités et bien avant leur téléchargement dans les éléments de sécurité.

Les données confidentielles DC sont sécurisées depuis le fournisseur 10 jusqu'à l'ESi. Le gestionnaire 11 ne peut pas altérer les données confidentielles. Optionnellement, il ne peut pas y accéder non plus.

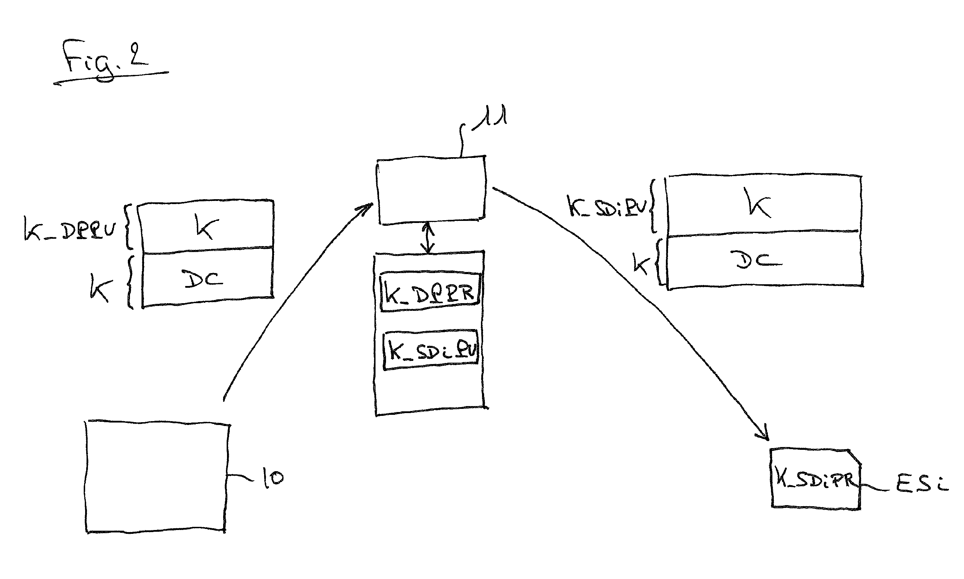

Le système de la figure 1 est basé sur un schéma de sécurité par clés secrètes : une première clé secrète K_DP est partagée entre le fournisseur de données 10 et le KMS du gestionnaire 11 et une deuxième clé secrète K_SDi est partagée entre le KMS et l'élément de sécurité. Il est également possible de n'utiliser qu'une clé secrète (K_DP ou K_SDi), l'autre clé étant une clé publique. La description suivante de la figure 2 permet de mieux comprendre l'utilisation d'une clé publique.

Dans le système représenté à la figure 2, deux clés publiques sont utilisées : le fournisseur de données 10 transmet au gestionnaire 11 des données confidentielles DC chiffrées par la clé de session K (comme précédemment décrit en référence à la figure 1), mais également cette clé de session K chiffrée par la clé publique, notée K_DPPU, du gestionnaire 11. Le KMS comprend la clé privée, notée K_DPPR du gestionnaire 11, permettant de procéder au déchiffrement de la clé de session K et rechiffrement atomique de la même clé de session K par une clé de chiffrement publique K_SDiPU associée à une clé privée (K_SDiPR) comprise dans l'élément de sécurité ESi. Le gestionnaire 11 transmet alors les données confidentielles DC chiffrées par la clé de session K et cette clé de session K chiffrée par la clé publique K_SDiPU à l'élément de sécurité ESi. Ce dernier procède alors au déchiffrement de la clé de session K grâce à sa clé privée K_SDiPR et déchiffre les données confidentielles DC à l'aide de la clé de session K et installe les données confidentielles DC dans l'élément de sécurité ESi.

Deux clés publiques sont ici utilisées (K_DPPU et K_SDiPU) mais il est également possible de n'utiliser qu'une clé publique (entre le fournisseur de données 10 et le gestionnaire 11 ou alors entre le gestionnaire 11 et l'élément de sécurité ESi), l'autre clé étant alors une clé secrète (comme décrit en référence à la figure 1).

L'invention concerne également un système de personnalisation d'un élément de sécurité ESi coopérant avec un terminal de télécommunications, cette personnalisation consistant à télécharger des données confidentielles dans l'élément de sécurité ESi. Le système selon l'invention comprend :
- des moyens pour provisionner, au niveau d'un fournisseur de données 10, les données confidentielles ;
- des moyens pour transmettre ces données confidentielles chiffrées par une clé de session K à un gestionnaire 11 de l'élément de sécurité ESi, la clé de session K étant chiffrée par une clé de transport K_DP ou K_DPPU, le gestionnaire 11 étant connecté à un système de gestion de clés KMS comprenant des moyens pour réaliser pour chaque clé de transport K_DP ou K_DPPU une opération de déchiffrement (K_DP ou K_DPPR) et de rechiffrement atomique par une clé de chiffrement K-SDi ou K_SDiPU correspondant à une clé K_SDi ou K_SDiPR comprise dans l'élément de sécurité ESi ;
- des moyens pour transmettre depuis le gestionnaire 11 de l'élément de sécurité ESi à cet élément de sécurité ESi les données confidentielles DC chiffrées par la clé de session K ainsi que cette clé de session K chiffrée par la clé K_SDi ou K_SDiPR comprise dans l'élément de sécurité ESi ;
- des moyens pour déchiffrer, au niveau de l'élément de sécurité ESi, la clé K de session K à l'aide de la clé K_SDI ou K_SDiPR stockée dans l'élément de sécurité ESi ;
- des moyens pour déchiffrer les données confidentielles DC dans l'élément de sécurité ESi à l'aide de la clé de session K et pour installer les données confidentielles DC dans l'élément de sécurité ESi.

## Revendications

1. Procédé de personnalisation d'un élément de sécurité (ESi) coopérant avec un terminal de télécommunications, ladite personnalisation consistant à télécharger des données confidentielles (DC) dans ledit élément de sécurité (ESi), ledit procédé consistant à :
- provisionner, au niveau d'un fournisseur de données (10), lesdites données confidentielles (DC) ;
- transmettre lesdites données confidentielles (DC) chiffrées par une clé de session (K) à un gestionnaire (11) dudit élément de sécurité (ESi), ladite clé de session (K) étant chiffrée par une clé de transport (K_DP, K_DPPU), ledit gestionnaire étant connecté à un système de gestion de clés (KMS) comprenant des moyens pour réaliser pour chaque clé de transport (K_DP, K_DPPU) une opération de déchiffrement (K_DP, K_DPPR) et de rechiffrement atomique par une clé de chiffrement (K_SDi, K_SDiPU) associée à une clé (K_SDi, K_SDiPR) comprise dans ledit élément de sécurité (ESi) ;
- transmettre depuis ledit gestionnaire (11) dudit élément de sécurité (ESi) audit élément de sécurité (ESi) lesdites données confidentielles (DC) chiffrées par ladite clé de session (K) ainsi que cette clé de session (K) chiffrée par la clé associée à ladite clé (K_SDi, K_SDiPR) comprise dans ledit élément de sécurité (ESi) ;
- déchiffrer, au niveau dudit élément de sécurité (ESi), ladite clé K de session (K) à l'aide de ladite clé (K_SDi, K_SDiPR) stockée dans ledit élément de sécurité (ESi) ;
- déchiffrer lesdites données confidentielles dans ledit élément de sécurité à l'aide de ladite clé de session (K) et installer lesdites données confidentielles dans ledit élément de sécurité (ESi).

2. Procédé selon la revendication 1, **caractérisé en ce que** ladite clé de transport (K_DP) est une clé secrète partagée entre ledit fournisseur de données (10) et ledit système de gestion de clés (KMS).

3. Procédé selon l'une des revendications 1 et 2, **caractérisé en ce que** ladite clé de chiffrement (K_SDi) est une clé secrète partagée entre ledit système de gestion de clés (KMS) et ledit élément de sécurité (ESi).

4. Procédé selon la revendication 1, **caractérisé en ce que** ladite clé de transport (K_DPPU) est une clé publique dudit gestionnaire et **en ce que** ledit système de gestion de clés (KMS) renferme une clé privée (K_DPPR) correspondante.

5. Système selon l'une des revendications 1 et 4, **caractérisé en ce que** ladite clé de chiffrement (K_SDiPU) est une clé publique dudit élément de sécurité (ESi) et **en ce que** ledit élément de sécurité (ESi) renferme une clé privée (K_SDiPR) correspondante.

6. Procédé selon l'une des revendications 1 à 5, **caractérisé en ce que** ledit élément de sécurité (ESi) est un e-UICC.

7. Procédé selon l'une des revendications 1 à 5, **caractérisé en ce que** ledit élément de sécurité (ESi) est un élément de sécurité dédié à une application différente d'une application téléphonique.

8. Procédé selon la revendication 7, **caractérisé en ce que** ledit élément de sécurité (ESi) renferme une application de paiement de type NFC.

9. Procédé selon l'une des revendications 1 à 6, **caractérisé en ce que** ledit terminal de télécommunications est connecté à une machine pour des communications de type M2M.

10. Système de personnalisation d'un élément de sécurité (ESi) coopérant avec un terminal de télécommunications, ladite personnalisation consistant à télécharger des données confidentielles dans ledit élément de sécurité (ESi), ledit système comprenant :
- des moyens pour provisionner, au niveau d'un fournisseur de données (10), lesdites données confidentielles (DC) ;
- des moyens pour transmettre lesdites données confidentielles (DC) chiffrées par une clé de session (K) à un gestionnaire (11) dudit élément de sécurité (ESi), ladite clé de session (K) étant chiffrée par une clé de transport (K_DP, K_DPPU), ledit gestionnaire étant connecté à un système de gestion de clés (KMS) comprenant des moyens pour réaliser pour chaque clé de transport (K_DP, K_DPPU) une opération de déchiffrement et de rechiffrement atomique par une clé de chiffrement (K_SDi, K_SDiPU) associée à une clé (K_SDi, K_SDiPR) comprise dans ledit élément de sécurité (ESi) ;
- des moyens pour transmettre depuis ledit gestionnaire (11) dudit élément de sécurité (ESi) audit élément de sécurité (ESi) lesdites données confidentielles (DC) chiffrées par ladite clé de session (K) ainsi que cette clé de session (K) chiffrée par la clé de chiffrement associée à ladite clé (K_SDi, K_SDiPR) comprise dans ledit élément de sécurité (ESi) ;
- des moyens pour déchiffrer, au niveau dudit élément de sécurité, ladite clé K de session (K) à l'aide de ladite clé (K_SDi, K_SDiPR) stockée dans ledit élément de sécurité (ESi) ;
- des moyens pour déchiffrer lesdites données confidentielles dans ledit élément de sécurité (ESi) à l'aide de ladite clé de session (K) et pour installer lesdites données confidentielles dans ledit élément de sécurité (ESi).
